# EUROPEAN PATENT APPLICATION

(11) **EP 4 108 645 A1**
(43) Date of publication of application: **28.12.2022**
(21) Application number: 21181103.9
(22) Date of filing: 23.06.2021
(51) Int. Cl.: C04B 28/04, C04B 28/06, C04B 28/14, C04B 40/06

(54) **HIGHLY THERMOINSULATING AND SOUND-DAMPENING DRY MIX MORTAR WITH RELATIVELY HIGH STRENGTH AND ADHESION**

(71) Applicant: Henkel AG & Co. KGaA, 40589 Düsseldorf (DE)
(72) Inventor: Auer, Stephan, 58730 Fröndenberg (DE)

(57) **Abstract**

The present invention relates to dry mix mortar compositions comprising at least one ettringite-forming cement component, at least one filler component, and at least one redispersible polymer component.

The present invention further relates to a building material mix formed from such a dry mix mortar composition, and further to uses thereof.

## Description

The present invention relates to dry mix mortar compositions comprising at least one ettringite-forming cement component, at least one lightweight filler component, and at least one redispersible polymer component. The present invention further relates to a building material mix formed from such a dry mix mortar composition, and further to uses thereof.

Dry mortar mixtures are prefabricated dry mixtures (so-called ready-mixed mortars; German: *Werktrockenmörtel*) consisting of at least one mineral binder, at least one aggregate and usually at least one additive, which only need to be mixed with water to form a fresh mortar at the construction site and are thus ready for use.

Although various dry mix mortar compositions are known in the art and marketed, there remains a need in the art for dry mix mortar compositions for the on-site production of building material compositions having highly thermoinsulating properties as well as good mechanical strength and adhesive properties, wherein the dry mix mortar can be easily, economically and environmentally friendly produced, packaged, transported and finally safely admixed and applied to the respective substrate.

This need is met by the present invention in providing a dry mix mortar composition which yields building material compositions exhibiting a uniquely high performance mix of high compressive and flexural strength, and good tensile adhesion, particularly on concrete, furthermore very low fresh and dry mortar density combined with very low thermal conductivity. The mortar yield is high (about 1 kg of dry mix mortar may yield up to 5 liters of fresh mortar), and in addition it has been surprisingly found that the respectively formed building material composition has superior sound-dampening properties.

In a first aspect, the present invention thus relates to a dry mix mortar composition, characterized in that it comprises:
a) at least one cement-containing, hydraulic binder component, said binder forming ettringite as the main hydration product upon contact with water;
b) at least one lightweight filler component; and
c) at least one redispersible polymer component.

In a second aspect, the present invention relates to a building material composition comprising a dry mix mortar composition as herein described, and water.

In a third aspect, the present invention further relates to the use of the building material composition, as herein disclosed, as tile adhesive, sealing slurry, joint filler, repair mortar, knifing filler, screed, plaster, render, adhesive mortar or reinforcing mortar for composite thermal insulation systems, fire protection mortar, filling mortar or lightweight mortar for 3D printing. In this context the usages are preferably defined as tile adhesive in accordance with DIN EN 12004, as sealing slurry, or joint filler in accordance with EN 13888, as repair mortar in accordance with EN 1504, as knifing filler, screed, plaster or render in accordance with EN 998-1, or as adhesive mortar or reinforcing mortar for composite thermal insulation systems (CTIS) in accordance with EN 13499 and EN 13500.

Embodiments of the present invention are described below, but the present invention is not limited thereto. It should be recognized that these embodiments are merely illustrative of the principles of the present invention. Numerous modifications and adaptations will be readily apparent to those of skill in the art without departing from the scope of the invention.

"One or more", as used herein, relates to at least one and comprises 1, 2, 3, 4, 5, 6, 7, 8, 9 or more of the referenced species. Similarly, "at least one" means one or more, i.e. 1, 2, 3, 4, 5, 6, 7, 8, 9 or more. "At least one", as used herein in relation to any component, refers to the number of chemically different molecules, i.e. to the number of different types of the referenced species, but not to the total number of molecules.

In the present specification, the terms "a" and "an" and "at least one" are the same as the term "one or more" and can be employed interchangeably.

"About", as used herein in relation to a numerical value, means said value ±10%, preferably ±5%.

All percentages given herein in relation to the compositions or formulations relate to weight % relative to the total weight of the respective composition or formula, if not explicitly stated otherwise.

The object of the present invention is to provide a dry mix mortar composition, characterized in that it comprises three main components, said main components being:
a) at least one cement-containing, hydraulic binder component;
b) at least one lightweight filler component; and
c) at least one redispersible polymer component

In the context of the present invention, the term "main component" is intended to refer to components having essential character and functionality with regards to the desired properties of the respective product, i.e. the dry mix mortar composition, but also the building material composition, which is obtainable upon mixing said dry mix mortar composition with water, as herein described. Said term, however, is not intended to refer to components, which, in terms of wt.-%, are present in the respective composition in higher proportions than any further components, although this may, according to various embodiments, nonetheless be the case.
a) Cement-containing, hydraulic binders suitable for employment in the context of the present invention are materials, which, upon contact with water, form ettringite or AFt (C₆A*S̅*₃H₃₂ or 3CaO.AI2O3.3CaSO4.32H2O) as the main hydration product, both during early hydration with water (i.e. within a few hours, e.g. about 1 to 24 hours, after being contacted with water) and during late hydration with water (i.e. within a few days, weeks, months and years after being contacted with water).

In the context of the present invention, the term "main hydration product" is intended to refer to the main crystalline hydration product. According to various embodiments ettringite together with amorphous aluminum hydroxide is formed as the main hydration product.

According to various embodiments, the at least one binder component, as defined above, is selected from the group consisting of calcium sulfoaluminate cement (CSA cement) Belite-Ye'elimite-Ferrite cement (BYF cement), and a blend consisting of calcium aluminate cement (CAC), calcium sulfate and Portland cement.

Thus, according to various embodiments, the at least one binder component, as herein defined, is calcium sulfoaluminate cement (CSA cement). Calcium sulfoaluminate cement is a type of cement developed in China. Calcium sulfoaluminate cement available on the market usually consists of calcium sulfoaluminate clinker and a set regulator component, e.g. gypsum or anhydrite. However, calcium sulfoaluminate cement available on the market may also consist exclusively of ground calcium sulfoaluminate clinker. Calcium sulfoaluminate clinker is produced from the raw materials limestone, bauxite and gypsum by burning at approx. 1250-1350 °C in a rotary kiln and subsequent grinding. Calcium sulfoaluminate clinker has as its main component the anhydrous sulfate Ye'elimit of composition C₃A₃Cs (Ca₄Al₆O₁₂(SO₄). In addition, C₂S (belite), gehlenite, brownmillerite, ternesite, spinel and other minor phases coexist. During hydration of calcium sulfoaluminate cement, ettringite, monosulfate, aluminum hydroxide, CSH gel (calcium silicate hydrate gel), stratlingite and calcium hydroxide may form. If iron-rich raw materials are used, a ferritic calcium sulfoaluminate clinker is formed.

According to various embodiments, the calcium sulfoaluminate cement consists of calcium sulfoaluminate clinker and at least one calcium sulfate component as a set regulator for the calcium sulfoaluminate clinker.

According to various embodiments, the calcium sulfate component preferably is anhydrite. However, it may also be gypsum or hemihydrate. According to various embodiments, the calcium sulfoaluminate cement may also comprise mixtures of said calcium sulfate components. Preferably, however, it contains only anhydrite.

In various embodiments, the calcium sulfoaluminate cement has a total amount of about 8 to 22 wt.-%, preferably about 12 to 18 wt.-%, of calcium sulfate component(s).

Thus, according to various embodiments, the calcium sulfoaluminate clinker and the at least one calcium sulfate component form the calcium sulfoaluminate cement. Thus, in the context of the invention, the anhydrite component is considered part of the binder component.

Calcium sulfoaluminate cements are available on the market in premixed form. In addition to the calcium sulfoaluminate clinker and the anhydrite, they may also contain other minor constituents. However, their proportion is typically < 5 wt.-%, based on the total weight of the CSA cement. Examples of commercially available CSA cement suitable for employment according to the present invention include, without limitation, i.tech ALI CEM by Italcementi Group, and Next base by Buzzi Unicem.

According to various other embodiments, the at least one binder component is Belite-Ye'elimite-Ferrite cement (BYF cement). Belite-Ye'elimite-Ferrite cements represent relatively a new generation of cements. The clinkers comprise both belite and ye'elimite as major phases, but with belite preponderant, and usually also furthermore an appreciable amount of a calcium aluminoferrite phase. Because the relative abundance of these phases in such clinkers is belite>ye'elimite>ferrite, they are referred to as "BYF". BYF has been developed with the intention of entirely replacing Portland clinkers in cements intended for a wide range of large-scale construction applications. As an alternative to e.g. Portland cements, CO₂ emissions may be reduced in the cement clinker production, because these materials require both lower amounts of limestone and lower operating temperatures and, in addition, they are easily ground. The most common composition of BYF clinkers includes P-C₂S, C₄A₃*S̅*, and C₄AF, being iron-rich sulfobelite materials. BYF cements are prepared by grinding the clinker with different amounts of a calcium sulfate set regulator such as gypsum, bassanite or anhydrite.

According to various other embodiments, the at least one binder component is calcium aluminate cement (CAC). The first CAC, containing iron and manufactured in a smelting process, the "Ciment Fondu Lafarge" was first sold in 1918. Calcium aluminate cements were first standardized in EN 14647 in 2006. Due to its considerably high aluminate content in comparison to Portland cement, it was initially referred to as High Alumina Cement in English-speaking countries. In Germany it was and is referred to as "Tonerdezement".

Commercially available calcium aluminate cements normally cover an aluminium oxide range of 36-85 % by weight. They can be produced either by way of the melting or the sintering process. The different types of calcium aluminate cement can be effectively categorized in the groups rich in iron, low in iron and iron-free.

Typical calcium aluminate cements that are rich in iron are produced by means of the smelting process, have a grey to black-grey color and can be characterized by their chemical composition as follows: 36-42 % Al₂O₃, 2-6 % SiO₂, 14-19 % Fe₂O₃, 37-40 % CaO and less than 1.5 % MgO as well as less than 0.4 % SO₃.

Calcium aluminate cements that are low in iron are colored beige to grey and typically contain:
50-55 % Al₂O₃, 2-6 % SiO₂, 1-3 % Fe₂O₃, 37-40 % CaO and less than 1.5 % MgO as well as less than 0.4 % SO₃.

Calcium aluminate cements that are free of iron are not included in EN 14647, are white in color and have varying degrees of lightness or whiteness, are usually produced by way of the sintering process, can contain added Al₂O₃ and therefore have the following, typical compositions: 68-85 % Al₂O₃, <1% SiO₂, <0.5 % Fe₂O₃, 26-31 % CaO.

It is therefore clear that the color of calcium aluminate cements becomes darker the higher their iron content. For further information on the chemical and mineralogical composition of calcium aluminate cements refer, for example, to Taylor, "Cement Chemistry", 2nd edition, page 296 and "Lea's Chemistry of Cement and Concrete", 4th edition, 2004, page 716 ff.

Non-limiting examples of commercially available calcium aluminate cements are those sold under the trade names Istra 40 (Calucem), CIMENT FONDU and TERNAL, such as TERNAL RG (both Imerys Aluminates), Electroland (Cementos Molins) as well as Gorkal 40 (Gorka) and Istra 50 (Calucem), SECAR 51 (Imerys Aluminates) as well as Gorkal 50 (Gorka), and any CA cements according to the EN 14647 Standard

The mentioned CAC have in common, that the main mineralogical phase is monocalciumaluminate, CA. Also available CAC cements can have C12A7 Mayenite as the main phase, or C12A7 in a glass phase. Such cements are typically combined with Calciumsulfate, OPC or portlandite to form ettringite when mixed with water. Examples are Ternal EP or TERNAL EV by Imerys Aluminates.

According to still further embodiments, the at least one binder component is a blend consisting of calcium aluminate cement (CAC), calcium sulfate and Portland cement.

Calcium aluminate cements suitable for employment in the context of the present invention have already been discussed above.

Portland cements may, for instance but without limitation, be selected from CEM I, II, III, IV and V, preferred ones being those defined in the EN 197-1 Standard, more preferably cements comprising calcium carbonate, silica fume, slag, fly ash, pozzolan, glass or siliceous filler or mixtures thereof. Such cements include Portland cement (CEM I); Portland slag cement; Portland-silica fume cement; Portland-pozzolana cement; Portland-fly ash cement; Portland-limestone cement; and Portland-composite cement preferably comprising calcium carbonate, silica fume, slag, fly ash, pozzolan, glass or siliceous filler or mixtures thereof; pozzolanic cement; and composite cement.

The calcium sulfate may be selected from dihydrate, hemihydrate and anhydride, preferably from alpha-hemihydrate, beta-hemihydrate and anhydrite, and may have average particle sizes in the range of about 1 to about 100 microns, preferably in the range of about 1 to about 50 microns, and particularly in the range of about 1 to about 20 microns.

The amount of CAC in a respective blend may be in the range of about 30 to about 80 wt.-%, preferably in the range of about 40 to about 70 wt.-%, particularly in the range of about 50 to about 70 wt.-%, based on the total weight of said binder blend. The amount of Portland cement in a respective blend may be in the range of about 5 to about 60 wt.-%, preferably in the range of about 10 to about 50 wt.-%, particularly in the range of about 10 to about 45 wt.-%, based on the total weight of said binder blend. The amount of calcium sulfate in a respective blend may be in the range of about 5 to about 35 wt.-%, preferably in the range of about 5 to about 30 wt.-%, particularly in the range of about 10 to about 25 wt.-% based on the total weight of said binder blend.

It is preferred that the amount of the at least one binder component, as defined and described above, is in the range of about 20 wt.-% to about 60 wt.-%, such as about 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59 or 60 wt.-%, preferably in the range of about 35 wt.-% to about 50 wt.-%, based on the total weight of the dry mix mortar composition.

The above-described binder materials suitable for employment in the context of the present invention provide for high strength in the respectively formed building material composition, i.e. mortar, that is high compressive and flexural strength, high cohesion and adhesion; a low degree of shrinkage after set, and a fast crystalline binding of the mixing water. It may be observed, however, that the binder component is, at the same time, a good heat and sound-wave conductor, and thus may, in various embodiments, be kept at a minimum level according to the respective purpose of the mortar.
b) The lightweight fillers suitable for incorporation in the dry mix mortar composition according to the present invention are soluble or swellable to only a small extent in the aqueous systems. In particular, they do not act as a binder. Non-limiting examples of inorganic lightweight fillers include aluminosilicates, such as perlites, expanded glass spheres, hollow glass microspheres, such as foamed glass, and expanded clay. Non-limiting examples of natural lightweight fillers include mineral foam, pumice, foamed larva and expanded vermiculite.

According to various embodiments, the lightweight filler component comprises aluminosilicates, preferably perlite, more preferably closed-cell expanded perlite.

Expanded perlite refers to particles having a mean particle diameter d₉₀ typically between 20-500 microns or 30 to 350 microns, preferably between 50-300 microns. In various embodiments, said particles can have an effective particle density of less than 0.50g/cc, more preferably less than 0.40g/cc and most preferably less than 0.30g/cc, such as about 0.1 g/cc. In various embodiments, said particles are chemically treated so as to increase hydrophobicity thereof, for instance but without limitation by applying silane, siloxane or silicone coatings or a mixture thereof.

Accordingly, employment of closed-cell expanded perlite, particularly coated closed-cell expanded perlite filler materials allows for a reduction of water amounts necessary for the eventual formation of building material compositions according to the present invention, which are the result of mixing the dry mix mortar composition, as described herein, with water. Resultant products have superior mechanical properties and physical characteristics when compared to conventional products. According to various embodiments, compounds suitable for forming a coating on the perlite particles are alkyl alkoxy silanes. Octyltriethoxy silane may be mentioned as a more specific example of alkyl alkoxy silane compounds suitable for coating purposes.

Commercially available examples, which, however, are not to be construed as limiting examples, include products marketed by Omya International AG under the trade name Omyasphere, particularly those of the Omyasphere^{®} 200 series, an especially preferred example of which is Omyasphere^{®} 235 T-FQ.

In various embodiments, the closed-cell expanded perlite in the dry mix mortar composition according to the present invention may be in the range of 10 to 60 wt.-%, such as 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59 and 60 wt.-%, preferably in the range of 20 to 50 wt.-%, more preferably in the range from 25 to 45 wt.-%, based on the total weight of the dry mix mortar composition.

In various further embodiments, the dry mix mortar composition comprises hollow glass microspheres, especially foamed glass.

In the context of the present invention, the term "hollow microglass spheres" refer to closed-cell, hollow microstructures, preferably the hollow glass microspheres are from foamed glass. Preferably, the foamed glass is multi-celled, that is, the spherical interior is subdivided into multiple cells.

Hollow microglass spheres suitable for employment in the context of the present invention comprise or consist of borosilicate glass or soda-lime glass. Preferably, however, the hollow microglass spheres, especially the foamed glass, consists of recycled glass.

In various embodiments, the average particle diameter dso of the hollow microglass spheres is in the range of about 45 to 2000 µm, preferably 50 to 1000 µm, more preferably 100 to 500 µm.

In general, particle diameters may be determined according to ISO 13320:2009-10 by means of laser granulometry. The dₓ value indicates that x [vol%] of the particles have a diameter smaller than the specified value. For the determination of particle sizes, the CILAS 1064 instrument may be used.

In another embodiment the lightweight filler, especially of the hollow microglass spheres, preferably the foamed glass, has a grain size in the range of about 45 to 4000 µm, preferably 50 to 2000 µm, more preferably 70 to 1000 µm. In general, the grain size can be determined by sieve analysis.

Commercially available examples of foamed glass suitable for employment according to the present invention include, without limitation, those marketed by Poraver^{®}.

The amount of microglass spheres, preferably foamed glass present in the dry mix mortar composition according to the present invention may be in the range of about 1 to about 30 wt.-%, such as about 1, 2, 3, 4, 5, 6, 7, 8, 9, 10, 11, 12, 13, 14, 15, 16, 17, 18, 19, 20, 21, 22, 23, 24, 25, 26, 27, 28, 29 or 30 wt.-%, preferably in the range of about 7 to about 20 wt.-%, based on the total weight of the dry mix mortar composition.

According to various embodiments, the lightweight filler component preferably comprises or consists of a combination of closed-cell expanded perlite and hollow microglass spheres, preferably foamed glass, as herein described above.

It is preferred that the amount of the at least one light weight filler component is in the range of about 20 wt.-% to about 70 wt.-%, such as about 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69 or 70 wt.-%, preferably in the rage of about 40 wt.-% to about 60 wt.-%, based on the total weight of the dry mix mortar composition.

The filler component, as herein defined and described above, provides for the desired low thermal conductivity, it breaks/blocks sound transmission, and supports advantageous low shrinkage properties. Due to its low degree of swelling upon contact with water, which may be further improved by any hydrophobic surface treatment, a high mortar yield may be achieved, while at the same time providing for a low density product. To this end, the bulk density of any lightweight filler material may be in the range of about 0.05 to 0.15 kg/dm³, preferably about 0.1 kg/dm³. Preferably, it should be incorporated at maximum dosage according to the respective purpose of the mortar.
c) The term redispersible polymer refers to (co)polymers, which can be obtained as a water-based dispersion by appropriate polymerization processes, such as emulsion polymerization processes. Typically, the thusly obtained polymers are converted into a polymer powder in a further step by suitable drying measures such as spray drying. When mixed into water or aqueous systems, the redispersible polymer powder once again forms a water-based dispersion, hence the term redispersible polymers. The use of redispersible dispersion powders in aqueous building material mixes allows important product properties, in particular properties which are important in the cured state, for example abrasion resistance, scratch resistance, tensile adhesion strength, flexibility in bending and surface adhesion to various substrates, to be improved. Redispersible polymer powders are known to act essentially as organic binders in the building material mix which has been made up with water, with this effect being based mainly on formation of a polymer film from the primary particles as a result of evaporation of water.

Suitable (co)polymers include those based on one or more ethylenically unsaturated monomers which can be selected from among one or more of the following monomer groups: vinylaromatics, vinyl esters or branched or unbranched alkylcarboxylic acids having from 1 to 15 carbon atoms, dienes, (meth)acrylic esters of branched or unbranched alcohols having from 1 to 10 carbon atoms, vinyl halides and olefins. The monomers should preferably have a hydrophobic character.

Examples of preferred monomers within the group of vinylaromatics are styrene, vinyltoluene and α-methylstyrene. As preferred vinyl esters of branched or unbranched alkylcarboxylic acids having from 1 to 15 carbon atoms, mentioning may be made of vinyl acetate, vinyl propionate, vinyl butyrate, vinyl 2-ethyl- hexanoate, 1-methylvinyl acetate, vinyl laurate and vinyl esters of monocarboxylic acids, which have a tertiary carbon atom in the alpha position relative to the acid group and have from 5 to 11 carbon atoms (vinyl versatates), for example VeoVa5^{®} (vinyl pivalate), VeoVa9^{®}, VeoVa10^{®} and VeoVa11^{®} (trade names of Shell), with vinyl acetate and the abovementioned vinyl versatates being particularly preferred. Preferred dienes are 1,3-butadiene and isoprene, and preferred (meth)acrylic esters of branched or unbranched alcohols having from 1 to 10 carbon atoms are methyl (meth)acrylate, ethyl (meth)acrylate, propyl (meth)acrylate, n-butyl (meth)acrylate, and 2-ethylhexyl acrylate. Preferred olefins are ethylene, propylene, 1-butene and 2-methylpropene, particularly preferably ethylene. Preferred vinyl halide monomers are vinyl chloride and vinylidene chloride.

As (co)polymers suitable as redispersible polymer powders, preference is given to the following types, with the figures for the respective monomers being % by weight based on the (co)polymer and, if appropriate together with further monomer units, adding up to 100 % by weight: From the group of polymers of vinyl alkylcarboxylates, preference is given to vinyl acetate polymers which may be partially hydrolyzed; vinyl acetate-ethylene copolymers having an ethylene content of from 1 to 60 % by weight; vinyl acetate copolymers with from I to 50 % by weight of one or more, further vinyl ester monomers such as vinyl laurate. vinyl pivalate and in particular VeoVa9^{®}, VeoVa10^{®} and VeoVa11^{®} (trade names of Shell), with these copolymers being able to contain from 1 to 40 % by weight of ethylene as further monomer; vinyl ester-ethylene-vinyl chloride copolymers having an ethylene content of from 1 to 40% by weight and a vinyl chloride content of from 20 to 90 % by weight (possible vinyl esters are, for example, vinyl acetate, vinyl propionate, vinyl butyrate, vinyl 2-ethyl- hexanoate, 1-methylvinyl acetate, vinyl laurate and vinyl esters of monocarboxylic acids which have a tertiary carbon atom in the alpha position relative to the acid group and have from 5 to 11 carbon atoms (vinyl versatates), for example VeoVa5^{®} (vinyl pivalate), VeoVa9^{®}, VeoVa10^{®} and VeoVa11^{®} (trade names of Shell)); vinyl acetate-acrylic ester copolymers which contain from 1 to 60 % by weight of acrylic ester, preferably n-butyl acrylate, and may additionally contain from 1 to 40 % by weight of ethylene. Among the group of (meth)acrylic ester polymers, preference is given to copolymers composed of the monomer units n-butyl acrylate and/or 2-ethylhexyl acrylate; copolymers of methyl methacrylate with n-butyl acrylate and/or 2-ethylhexyl acrylate and copolymers of methyl methacrylate with 1,3-butadiene. Among the group of vinyl halide copolymers, preference is given to the 5 abovementioned vinyl ester-ethylene-vinyl chloride copolymers and also vinyl chloride-ethylene copolymers and vinyl chloride-acrylate copolymers. Among the group of vinylaromatic copolymers, preference is given to styrene-butadiene copolymers and styrene-acrylic ester copolymers such as styrene-n-butyl acrylate or styrene-2-ethylhexyl acrylate having a styrene content of in each case 10 from 10 to 70 % by weight. In a further embodiment, particular preference is given to vinyl acetate polymers, vinyl acetate-ethylene copolymers having an ethylene content of from 1 to 60 % by weight, vinyl acetate copolymers with from 1 to 50 % by weight of one or more, further vinyl ester monomers such as vinyl laurate, vinyl pivalate and in particular vinyl versatates such as VeoVa9^{®}, VeoVa10^{®} and VeoVa11^{®} (trade names of Shell), with these copolymers additionally being able to contain from 1 to 40 % by weight of ethylene as further monomer. Particular preference is also given to vinyl acetate-acrylic ester copolymers which contain from 1 to 60% by weight of acrylic ester, preferably n-butyl acrylate, and may additionally contain from 1 to 40 % by weight of ethylene. Particular preference is also given to styrene-butadiene copolymers and styrene-acrylic ester copolymers such as styrene-n-butyl acrylate or styrene-2-ethylhexyl acrylate having a styrene content of in each case from 10 to 70 % by weight.

The redispersible polymer powder is very particularly preferably present as vinyl acetate polymer, vinyl acetate-ethylene copolymer, vinyl acetate-ethylene/vinylchloride copolymer, vinyl acetate-vinyl ester copolymer and/or vinyl acetate-vinyl ester-ethylene copolymer, with the vinyl ester monomers being selected in each case from the group consisting of vinyl laurate, vinyl pivalate and vinyl versatates, also as vinyl acetate-acrylic ester copolymer, vinyl acetate-acrylic ester-ethylene copolymer, styrene-butadiene copolymer and styrene-acrylic ester copolymer, with the acrylic esters in each case being esters of branched or unbranched alcohols having from 1 to 10 carbon atoms.

If appropriate, the (co)polymers can additionally contain functional comonomer units in an amount of from 0.1 to 10 wt.-%, based on the total weight of the polymer. These functional comonomer units can be selected from the group consisting of monocarboxylic or dicarboxylic acids, for example (meth)acrylic acid and/or maleic acid; the group consisting of ethylenically unsaturated carboxamides such as (meth)acrylamide, from the group consisting of ethylenically unsaturated sulphonic acids and salts thereof, preferably vinylsulphonic acid and/or styrene- sulphonic acid; from the group consisting of multiply ethylenically unsaturated comonomers, for example divinyl adipate, triallyl isocyanurate, diallyl maleate and/or allyl methacrylate.

In some embodiments, the redispersible polymer component comprises or consists of vinyl acetate-ethylene copolymer.

Commercially available examples of redispersible polymers suitable for employment in the context of the present invention include, without limitation, dispersible polymer powders of the VINNAPAS^{®} series by Wacker, particular examples of which include VINNAPAS^{®} 5028 E and VINNAPAS^{®} 8034 H.

In various embodiments, the amount of the redispersible polymer component is in the range of about 3 wt.-% to about 20 wt.-%, such as about 3, 4, 5, 6, 7, 8, 9, 10, 11, 12, 13, 14, 15, 16, 17, 18, 19 or 20 wt.-%, preferably in the range of about 6 wt.-% to about 15 wt.-%, based on the total weight of the dry mix mortar composition.

The redispersible polymer component, as herein defined and described above, serves the purpose of providing low thermal conductivity properties in the respective end-use mortar composition. It improves overall flexibility, supports adhesion to substrates and coverings, such as tiles, ETICS boards, etc, as well as internal cohesion of the mortars. Additionally, it breaks/blocks sound transmission. It builds in a softening factor within the internal structure of the mortar matrix, more particulary at the transition zone of hydrating binder and lightweight filler surface.

According to various further embodiments, the dry mix mortar composition of the present invention additionally comprises at least one polysaccharide-based, water-soluble water retention agent acting as a stabilizer.

Water-soluble water retention agents based on polysaccharide structures serve not only to retain water, but also to set rheological properties of the corresponding building material compositions, for example the viscosity and/or the thixotropy. Thixotropic properties are necessary, for example in tile adhesive mortars, in order to improve the slip resistance while at the same time allowing the position of the tile to be corrected readily. Another important improvment is also to provide a higher initial tack to the surfaces, which shall be bonded together. Thus, particularly if a building material composition according to the present invention is intended for application as a tile adhesive, the dry mix mortar composition comprises at least one water-soluble water retention agent. Preference is given to cellulose ethers, for example alkylcelluloses such as methylcellulose, ethylcellulose, propylcellulose and methylethylcellulose, hydroxy- alkylcelluloses such as hydroxyethylcellulose (HEC), hydroxypropylcellulose (HPC) and hydroxyethylhydroxypropylcellulose, alkylhydroxyalkylcelluloses such as methylhydroxyethylcelluose (MHEC), methylhydroxypropylcc/luose (MHPC) and propylhydroxypropylcellulose. Preference is given to the cellulose ether derivatives methylcellulose (MC), hydroxypropylcellulose (HPC), hydroxyethylcellulose (HEC) and ethylhydroxyethylcellulose (EHEC), and particular preference is given to methylhydroxyethylcelluose (MHEC) and methylhydroxypropylcelluose (MHPC). The abovementioned cellulose ether derivatives, which can in each case be obtained by appropriate alkylation or alkoxylation of cellulose, are preferably present as nonionic structures. On the other hand, carboxymethylcellulose (CMC), for example, is less suitable since the carboxylic acid groups interact with the calcium ions present in the aqueous cement-containing systems and thus reduce the solubility of the carboxymethylcellulose and consequently its effectiveness. This effect is reinforced by calcium-containing setting accelerators. In addition, nonionic starch ether derivatives may be used, such as hydroxypropylstarch, hydroxyethylstarch and methylhydroxypropylstarch. Preference is given to hydroxypropylstarch. The starch ether derivatives may be used alone or in combination with one or more of the abovementioned cellulose ether derivatives, particularly together with methylhydroxyethylcellulose (MHEC) and/or methylhydroxypropylcelluose (MHPC). Preference is likewise given to microbially produced polysaccharides such as welan gum and/or xanthans and naturally occurring polysaccharides such as alginates, carregeenans and galactomannans. These can be obtained from appropriate natural products by extractive processes, for example in the case of alginates and carregeenans from algae, in the case of galactomannans from carob seeds.

The amount of water retention agents in the dry mix mortar composition may be, according to various embodiments, in the range of about 0.1 to 1.5 wt.-%, such as about 0,1, 0.2, 0.3, 0.4, 0.5, 0.6, 0.7, 0.8, 0.9, 1.0, 1.1, 1.2, 1.3, 1.4 or 1.5 wt.-%, preferably in the range of about 0.2 to 1.2 wt.-%, particularly in the range of about 0.3 to 1.0 wt.-%, based on the total weight of the dry mix mortar composition.

In various embodiments, the dry mix mortar composition of the present invention comprises, in addition to the components listed and described above, at least one further ingredient, such as two or more further ingredients, which may, e.g. be selected from the group consisting of thickening agents, stabilizing agents, hydrophobizing agents, (super)plasticizers, fibers, and additional air entraining agents.

In various embodiments, the dry mix mortar composition according to the present invention further comprises at least one stabilizing agent, which, preferably, may be selected from alkali metal salts and bases, particularly lithium salts and bases. Non-limiting examples of lithium salts include lithium carbonate, lithium sulfate, lithium nitrate, lithium nitrite, and lithium silicate. A non-limiting example of a lithium base suitable for employment in the context of the present invention is lithium hydroxide. Preferably the stabilizing agent is selected from lithium carbonate and lithium sulfate.

A stabilizing agent may be present in an amount of about 0.005 to about 3 wt.-%, preferably in an amount of about 0.01 wt.-% to about 0.5 wt.-%, based on the total weight of the dry mix mortar composition.

In various embodiments, the dry mix mortar composition comprises at least one polycarboxylic acid or salt thereof, which may preferably be chosen from citric acid, malonic acid, malic acid, glutaric acid, adipic acid, oxalic acid, maleic acid, tartaric acid, succinic acid, ascorbic acid, glutamic acid and mixtures thereof. Particularly, the at least one polycarboxylic acid or salt thereof may be chosen from citric acid and salts thereof. The amount of polycarboxylic acid may be in the range of about 0.01 to about 2 wt.-%, preferably in the range of about 0.03 to about 0.5 wt.-%, based on the total weight of the dry mix mortar composition. Incorporation of at least one polycarboxylic acid or salt thereof allow the regulation of workability time (pot life) and start of setting processes of the respective building material composition after setting thereof.

The dry mix mortar composition may be provided in buckets, as bagged goods or as silo goods in a construction silo or dry mortar silo to the respective site of use, e.g. a construction site.

A fresh mortar, i.e. building material composition, should be freshly prepared by the respective user. For this purpose, the dry mortar mixture is mixed with mixing water in a manner known per se. This may be done, for instance but without limitation, by suitable electrically driven mixing tools with appropriate spindles, or in a plastering machine.

In a further aspect, the present invention thus relates to a building material composition, comprising a dry mix mortar composition as herein defined and described, and water. In various embodiments, the weight ratio of dry mix mortar composition to water is about 2:1 to about 1:2, more preferably about 1.1:1 to about 1:1.1.

The present invention encompasses all forms of administration of the inventive building material composition that are established in the art and/or are appropriate. These include, without limitation, pasty product forms to be spread across surfaces, such as the backside of tiles, concrete floor and walls, etc., as well as sprayable product forms, which may be sprayed onto a respective surface by means of appropriate devices, such as spray guns. Furthermore, the lightweight mortar can also be used in 3D printing of light weight construction elements or molds.

The specific combination of components, as herein defined and described above, yields building material composition excelling in mechanical strength, e.g. compressive and flexural strength, setting time, adhesion properties, e.g. tensile adhesion, and furthermore thermoinsulating and sound-dampening properties. More specifically, according to various embodiments, the building material composition according to the present invention exhibits a compressive strength in the range of about 1.0 to 3.5 N/mm² after 7 days and 28 days, such as about 2.5 N/mm² after 7 days and 28 days; a flexural strength in the range of about 0.5 to 2 N/mm² after 7 days and after 28 days, particularly about 1 N/mm² after 7 days and after 28 days; a degree of shrinkage in the range of less than 0.5 mm/m after 28 days, particularly a degree of shrinkage of about -0.7 mm/m after 28 days; a setting time in the range of about 90 to 200 minutes, preferably about 100 to 170 minutes, particularly about 95 to about 110 minutes for initial set and/or about 140 to about 160 minutes, preferably about 145 to about 155 minutes for final set; a tensile adhesion on concrete according to DIN EN 12004 in the range of about 0.4 to 0.6 N/mm² after 1 day, and in the range of about 0.6 to 0.9 N/mm² after 7 days and after 28 days, more particularly of about 0.5 N/mm² after 1 day, and/or of about 0.7 to 0.8 N/mm² after 7 days and after 28 days (thus fulfilling class C1); a thermal conductivity in the range of about 0.06 to 0.09 W/mK, particularly of about 0.07 to 0.08 W/mK; a fresh mortar density of less than about 0.6 kg/dm³, preferably less than about 0.5 kg/dm³; and/or a dry mortar density in the range of about 0.2 to 0.4 kg/dm³ after 14 days.

Accordingly, a building material composition is provided herein, which may be advantageously used in various fields of application, for instance, but without limitation, as tile adhesive, sealing slurry, joint filler, repair mortar, knifing filler, screed, plaster, render, adhesive mortar or reinforcing mortar for composite thermal insulation systems, fire protection mortar, filling mortar or lightweight mortar for 3D printing.. Accordingly, it may find application in tiling, façade and roof building and/or renovation, as well as wall and floor applications in general. It may furthermore be used as a component or co-building material in waterproof/breathable (WB) (thick)coatings and, especially when additional air entraining materials are incorporated, for fire protection purposes. Further fields of application might include ship building products, since the product herein disclosed is non-flammable, lightweight and flexible and decorative applications.

Accordingly, in yet another aspect, the present invention is furthermore directed to the use of the building material composition, as herein defined and described, as tile adhesive in accordance with DIN EN 12004, as a sealing slurry, or joint filler in accordance with EN 13888, as repair mortar in accordance with EN 1504, as knifing filler, parquet adhesive, screed, plaster or render in accordance with EN 998-1, or as adhesive mortar or reinforcing mortar for composite thermal insulation systems (CTIS) in accordance with EN 13499 and EN 13500.

All embodiments disclosed herein in relation to the compositions disclosed herein apply similarly to the uses of the invention and *vice versa.*

The following examples are given to illustrate the present invention. Because these examples are given for illustrative purposes only, the invention should not be deemed limited thereto.

### Examples

**Example 1:** Dry mix mortar compositions and resultant mortars (building material compositions) according to the invention

**Table 1**

| **Ingredients** | **E1** | **E2** | **E3** | **E4** | **E5** | **E6** | **E7** | **E8** | **E9** | **E10** | **E11** |
|---|---|---|---|---|---|---|---|---|---|---|---|
| CSA | 40.0 | 40.0 | 40.0 | 40.0 | 40.0 | 40.0 | 40.0 | 40.0 | 40.0 | 40.0 | 40.0 |
| MHPC | 0.4 | 0.4 | 0.4 | 0.4 | 0.4 | 0.4 | 0.4 | 0.4 | 0.4 | 0.4 | 0.4 |
| Citric acid | 0.05 | 0.01 | 0.01 | 0.0 | 0.01 | 0.01 | 0.01 | 0.01 | 0.01 | 0.01 | 0.01 |
| Lithium carbonate | 0.02 | 0.02 | 0.02 | 0.05 | 0.02 | 0.02 | 0.02 | 0.02 | 0.02 | 0.02 | 0.02 |
| Perlite (Omyasphere^{®} 235 T-FQ) | 37.53 | 37.57 | 42.57 | 37.57 | 37.57 | 37.57 | 37.57 | 37.57 | 37.57 | 37.57 | 37.57 |
| Hollow glass spheres (Poraver^{®} 0,25-0,5 mm) | 10.0 | 10.0 | 5.0 | 10.0 | 22.0 | 19.0 | 16.0 | 13.0 | 7.0 | 2.0 | 10.0 |
| Vinyl acetate/ethylene copolymer (Vinnapas^{®} 5028 E) | 12.0 | 12.0 | 12.0 | 12.0 | 0,0 | 3.0 | 6.0 | 9.0 | 15.0 | 20.0 | 10.0 |
| Ethylene/vinyl laurate/vinylchloride copolymer (Vinnapas^{®} 8034 H) | 0.0 | 0.0 | 0.0 | 0.0 | 0.0 | 0.0 | 0.0 | 0.0 | 0.0 | 0.0 | 2.0 |
| Total | 100 | 100 | 100 | 100 | 100 | 100 | 100 | 100 | 100 | 100 | 100 |
| Water demand [ml/kg] | 940 | 980 | 980 | 950 | 980 | 980 | 980 | 980 | 980 | 980 | 980 |
| Fresh mortar density [kg/dm³] | 0.55 | 0.47 | 0.45 | 0.51 | 0.61 | 0.60 | 0.60 | 0.54 | 0.54 | 0.55 | 0.45 |
| Dry mortar density after 1 day = demoulding [g/dm³] | n.a. | 0.48 | 0.48 | n.a. | 0,61 | 0,61 | 0,58 | 0,54 | 0,54 | 0,57 | 0,47 |
| Dry mortar density after 7 days s.c. [g/dm³] | n.a. | 0.31 | 0.31 | n.a. | 0,40 | 0,40 | 0,39 | 0,37 | 0,36 | 0,38 | 0,29 |
| Dry mortar density after 28 days s.c. [g/dm³] | n.a. | 0.31 | 0.31 | n.a. | 0,39 | 0,39 | 0,37 | 0,35 | 0,35 | 0,37 | 0,29 |
| Pot life s.c. [min] | 90 | 50 | 30 | 25 | 40 | 45 | 45 | 50 | 55 | 60 | 60 |
| Initial setting (IS) time, s.c. [min] | n.a. | 102 | 89. | n.a. | 73 | 74 | 89 | 87 | 102 | 119 | 80 |
| Final setting (FS) time, s.c. [min] | n.a. | 153 | 135 | n.a. | 127 | 142 | 169 | 228 | >375 | >445 | 312 |
| Tensile adhesion on concrete (acc.EN 12004), 1 day s.c. [N/mm²] | 0.51 | 0.44 | 0.42 | n.a. | n.a. | n.a. | n.a. | n.a. | n.a. | n.a. | n.a. |
| Tensile adhesion on concrete (acc.EN 12004), 7 days s.c. [N/mm²] | 0.81 | 0.69 | 0.62 | n.a. | 0.38 | 0.47 | 0.57 | 0.63 | 0.61 | 0.86 | 0.75 |
| Tensile adhesion on concrete (acc.EN 12004), 28 days s.c. [N/mm²] | 0.82 | 0.70 | 0.72 | n.a. | 0,36 | 0,53 | 0,58 | 0,76 | 0,85 | 0,87 | 0,70 |
| Tensile adhesion on concrete (acc. EN 12004), 7 days s.c. + 21 days water exposure [N/mm²] | n.a. | 0.35 | 0.36 | n.a. | 0,29 | 0,29 | 0,31 | 0,32 | 0,35 | 0,38 | 0,45 |
| Tensile adhesion on concrete (acc.EN 12004), 7 days s.c. + 14 days heat (70 °C) exposure [N/mm²] | n.a. | 0.58 | 0.62 | n.a. | 0,29 | 0,31 | 0,44 | 0,51 | 0,66 | 0,77 | 0,59 |
| Compressive strength, 7 days s.c. [N/mm²] | n.a. | 2.34 | 2.56 | n.a. | 2.63 | 2.54 | 2.24 | 2.24 | 2.31 | 2.39 | 1,94 |
| Compressive strength, 28 days s.c. [N/mm²] | n.a. | 2.18 | 2.44 | n.a. | 2,55 | 2,91 | 2,93 | 2,69 | 3,02 | 3,27 | 1,92 |
| Flexural strength, 7 days s.c. [N/mm²] | n.a. | 0.96 | 1.15 | n.a. | 0.62 | 0.91 | 1.12 | 1,00 | 1.22 | 1.27 | 0,91. |
| Flexural strength, 28 days s.c. [N/mm²] | n.a. | 0.96 | 0.99 | n.a. | 0,91 | 0,96 | 1,17 | 1,22 | 1,44 | 1,70 | 0,96 |
| Shrinkage, 7 days, s.c. [mm/m] | n.a. | -0,19 | -0,32 | n.a. | -0,03 | -0,03 | -0,02 | -0,02 | -0,02 | -0,02 | -0,02 |
| Shrinkage, 28 days, s.c. [mm/m] | n.a. | 0,00 | -0,13 | n.a. | -0,03 | -0,03 | -0,02 | -0,01 | -0,01 | -0,01 | 0,00 |
| λ_{10dry} 14 days s.c., [W/m*K] | n.a. | 0,074 | 0,072 | n.a. | n.a. | n.a. | n.a. | n.a. | n.a. | n.a. | 0,075 |

Dry mix mortar compositions E1-E11 were provided in accordance with the present disclosure. The respective building materials compositions (i.e. mortars) were obtained upon mixing of a dry mix mortar composition with water in the amount indicated in the above Table 1. As can be seen from example 5 compositions without a redispersible polymer component do not achieve sufficient tensile adhesion.

Description of the test conditions and test methods mentioned in table 1:
- s.c. = standard climate = 23°C / 50% relative humidity
- water demand, [ml/kg]: this is the water added to the dry mix mortar
- mixing procedure of mortar: is done acc. DIN EN 12004-2:2017-05 chapter 6 "mixing of the adhesive".
- fresh mortar density: is measured acc. DIN EN 1015-6:2007-05.
- dry mortar density: measured by weighing mortar prisms of dimension 4x4x16cm, which are processed acc. DIN EN 1015-11: 2007-05. The mortar prisms are demolded after 1 day from the steel molds and weighed directly after demolding (= 1 day). The dry mortar density in kg/dm³ is the weight of the prism in gram divided by the volume of the mortar prism of 256 cm³.
- pot life: is determined by the point of time in minutes after mixing the dry mix mortar with water, at which the mortar can't be worked with any longer with a metal spatula. The mortar shows a significant increase in viscosity and cannot be applied in proper way anymore.
- initial / final set : is determined by the "Vicat"-needle method following DIN EN 196-3:2017-03
- shrinkage: in [mm/m] is measured on mortar prisms of dimension 1 x 4x 16 cm following DIN EN 12808-4:2009-10
- tensile adhesion strengths are determined by following the standard for adhesives for ceramic tiles (tile adhesives) DIN EN 12004-2:2017-05
- compressive- / flexural strength are determined following DIN EN 1016-11:2007-05. For this purpose mortar prisms of dimension 40x40x160 mm are prepared.
- determination of thermal conductivity λ in W/m*K. Tests were done with a NETSCH instrument HFM 446 according to DIN EN 12664:2001-05. Test specimen (mortar cubes) had a dimension of 200 x 200 x 80 mm. The test specimen were prepared by placing the mixed mortar into a metal mold of dimension 200 x 200 x 80 mm, demolding took place after 2 days. The test specimen were dried in standard climate 23°C/50 % relative humidity for 10 days. Measurement was done in the temperature range 0°C - 20°C.

## Claims

1. A dry mix mortar composition, **characterized in that** it comprises:
a) at least one cement-containing, hydraulic binder component, said binder forming ettringite as the main hydration product upon contact with water;
b) at least one lightweight filler component; and
c) at least one redispersible polymer component.

2. The dry mix mortar composition according to claim 1, wherein the at least one binder component is present in an amount of about 20 wt.-% to about 60 wt.-%, preferably about 35 wt.-% to about 50 wt.-%, based on the total weight of the dry mix mortar composition.

3. The dry mix mortar composition according to claim 1 or claim 2, wherein the at least one light weight filler component is present in an amount of about 20 wt.-% to about 70 wt.-%, preferably about 40 wt.-% to about 60 wt.-%, based on the total weight of the dry mix mortar composition.

4. The dry mix mortar composition according to any one of claims 1 to 3, wherein the at least one redispersible polymer component is present in an amount of about 3 wt.-% to about 20 wt.-%, preferably about 6 wt.-% to about 15 wt.-%, based on the total weight of the dry mix mortar composition.

5. The dry mix mortar composition according to any one of claims 1 to 4, wherein the at least one binder component is selected from the group consisting of calcium sulfoaluminate cement (CSA cement), Belite-Ye'elimite-Ferrite cement (BYF cement), and a blend consisting of calcium aluminate cement (CAC), calcium sulfate and Portland cement.

6. The dry mix mortar composition according to any one of claims 1 to 5, wherein the at least one lightweight filler component is selected from the group consisting of aluminosilicates, hollow glass microspheres, such as foamed glass, expanded clay, mineral foam, pumice, foamed larva and expanded vermiculite.

7. The dry mix mortar composition according to any one of claims 1 to 6, wherein the at least one lightweight filler component comprises or consists of aluminosilicates, preferably perlite, more preferably closed-cell expanded perlite, or hollow microglass spheres, preferably foamed glass, or combinations thereof.

8. The dry mix mortar composition according to claim 7, wherein the dry mix mortar composition comprises the closed-cell expanded perlite in the range of 10 to 60 wt.-%, preferably in the range of 20 to 50 wt.-%, more preferably in the range from 25 to 45 wt.-%, based on the total weight of the dry mix mortar composition, and/or foamed glass in the range of about 1 to about 30 wt.-%, preferably in the range of about 7 to about 20 wt.-%, based on the total weight of the dry mix mortar composition.

9. The dry mix mortar composition according to any one of claims 1 to 8, wherein the at least one redispersible polymer component is selected from the group consisting of vinyl acetate polymer, vinyl acetate-ethylene copolymer, vinyl acetate-ethylene/vinylchloride copolymer, vinyl acetate-vinyl ester copolymer, vinyl acetate-vinyl ester-ethylene copolymer, and mixtures thereof, wherein preferably the vinyl ester monomers are selected in each case from the group consisting of vinyl laurate, vinyl pivalate and vinyl versatates, and/or is selected from the group consisting of vinyl acetate-acrylic ester copolymer, vinyl acetate-acrylic ester-ethylene copolymer, styrene-butadiene copolymer and styrene-acrylic ester copolymer, wherein preferably the acrylic esters in each case are esters with branched or unbranched alcohols having from 1 to 10 carbon atoms.

10. The dry mix mortar composition according to any one of claims 1 to 9, wherein the at least one redispersible polymer component comprises or consists of vinyl acetate-ethylene copolymer.

11. The dry mix mortar composition according to any one of claims 1 to 10, further comprising at least one polysaccharide-based, water-soluble water retention agent, preferably selected from cellulose ethers.

12. A building material composition comprising a dry mix mortar composition according to any one of claims 1-11, and water.

13. The building material composition according to claim 12, wherein the weight ratio of dry mix mortar composition to water is about 2:1 to about 1:2, more preferably about 1.1:1 to about 1:1.1.

14. The building material composition according to claim 12 or 13, wherein the building material composition exhibits
- a compressive strength in the range of about 1.0 to 3.5 N/mm² after 7 days and 28 days;
- a flexural strength in the range of about 0.5 to 2 N/mm² after 7 days and after 28 days;
- shrinkage in the range of less than 0.5 mm/m after 28 days;
- a setting time in the range of about 90 to 200 minutes, preferably about 100 to 170 minutes;
- a tensile adhesion according to DIN EN 12004 in the range of about 0.4 to 0.6 N/mm² after 1 day, and in the range of about 0.6 to 0.9 N/mm² after 7 days and after 28 days;
- a thermal conductivity in the range of about 0.06 to 0.09 W/mK;
- a fresh mortar density of less than about 0.6 kg/dm³; and/or
- a dry mortar density in the range of about 0.2 to 0.4 kg/dm³ after 14 days.

15. Use of the building material composition according to any one of claims 12 to 14, as tile adhesive, sealing slurry, joint filler, repair mortar, knifing filler, screed, plaster, render, adhesive mortar or reinforcing mortar for composite thermal insulation systems, fire protection mortar, filling mortar or lightweight mortar for 3D printing.
